# FASCICULE DE BREVET EUROPEEN

(11) **EP 2 876 846 B1**
(45) Date de publication et mention de la délivrance du brevet: **20.03.2019**
(21) Numéro de dépôt: 14194141.9
(22) Date de dépôt: 20.11.2014
(51) Int. Cl.: H04L 12/40, H04L 29/06

(54) **Procédé de détection du rejeu d'un paquet de données**
Verfahren zum Erfassen der Wiedergabe eines Datenpakets
Method for detecting the playback of a data packet

(30) Priorité: 20.11.2013 FR 1302679
(43) Date de publication de la demande: 27.05.2015
(73) Titulaire: Thales, 92200 Neuilly Sur Seine (FR)
(72) Inventeur: Duputz, Patrick, 92622 GENNEVILLIERS CEDEX (FR); Fouladgar, Sepideh, 92622 GENNEVILLIERS CEDEX (FR); Pinto, Carlos, 49309 CHOLET (FR)
(74) Mandataire: Lavoix

(56) Documents cités:
- US-A1- 2009 158 417
- US-A1- 2011 153 862
- DAVID R RAYMOND ET AL: "Scalable, Cluster-based Anti-replay Protection for Wireless Sensor Networks", INFORMATION ASSURANCE AND SECURITY WORKSHOP, 2007. IAW '07. IEEE SMC, IEEE, PI, 1 juin 2007 (2007-06-01), pages 127-134, XP031113770, ISBN: 978-1-4244-1303-4

## Description

La présente invention concerne un procédé du type pour détecter si un paquet d'une pluralité de paquets émis par au moins une station émettrice au travers d'un réseau a été rejoué, chaque paquet comprenant un message et un identifiant du paquet, la pluralité de paquets étant émis successivement sur plusieurs périodes de temps consécutives, le procédé comprenant les étapes suivantes :
- réception par au moins une station réceptrice du paquet et lecture de l'identifiant du paquet reçu pour obtenir un identifiant reçu,
- consultation par la station réceptrice d'une base de données d'identifiants ayant déjà été reçus pour déterminer si l'identifiant reçu a déjà été reçu, et
- si l'identifiant reçu n'a pas déjà été reçu, mise à jour de la base de données comprenant une mémorisation de l'identifiant reçu.

L'invention se rapporte au domaine de la sécurité des réseaux. L'objectif visé par l'invention est la protection contre le rejeu de paquets de données acheminés notamment via un réseau tolérant aux délais, ou DTN (en anglais : *Delay Tolerant Network*). Par « rejeu », on entend le fait qu'un paquet de données soit rejoué, i. e. émis par une entité non autorisée.

L'acheminement de paquets de données à travers un DTN engendre parfois une perturbation importante de l'ordonnancement des paquets. En réception, la détection du rejeu d'un paquet en est complexifiée. En effet, on conserve la trace de tous les paquets reçus sur une très longue durée. Cela crée des besoins importants en puissance de traitement et en capacité mémoire.

La plupart des solutions proposées dans l'art antérieur se fondent sur la mise en oeuvre d'un compteur à l'émission, qui permet d'identifier de manière unique les paquets transmis, et d'une table d'anti-rejeu glissante, de taille fixe, permettant de conserver la trace des N derniers paquets reçus, N allant typiquement de 32 à 256.

Dans ces solutions, la station réceptrice sauvegarde la valeur du plus grand des identifiants de paquets reçus, appelé T, et accepte un nouveau paquet reçu si :
- l'identifiant est supérieur à T, ou
- l'identifiant est compris dans l'intervalle [T-N+1;T] si le paquet n'a pas déjà été reçu.

Le récepteur rejette les paquets dont :
- l'identifiant est inférieur ou égal à T-N+1, ou
- l'identifiant est compris dans l'intervalle [T-N+1 ; T] si le paquet a déjà été reçu.

Une solution contre le rejeu est définie dans le cadre de IPSec (RFC 4301). Plus précisément, les deux protocoles suivants traitent ce sujet :
- le protocole n 51, AH, défini par la RFC 4302,et
- le protocole n 50, ESP, défini par la RFC 4303.

Dans l'une des solutions proposées, la table d'anti-rejeu stocke les identifiants des paquets reçus ou des paquets non reçus, les identifiants successifs pouvant être stockés sous forme d'intervalles, afin de minimiser la taille de la sous-table.

D'autres solutions cherchent à limiter l'impact de la réception d'un identifiant supérieur à T+N, car celle-ci provoque la perte d'une partie de la table d'anti-rejeu stockée. Ce cas de figure se présente par exemple lorsque plusieurs paquets sont envoyés sur une route, puis qu'une route plus courte devient disponible, entraînant la réception de paquets émis plus tardivement avant celle de paquets émis plus tôt.

Ainsi, dans l'une des solutions proposées, deux tables d'anti-rejeu sont considérées, une table de tête et une table de queue. Ces tables sont espacées par un intervalle stockant des identifiants non reçus. Si la station de réception reçoit un paquet ayant un identifiant compris dans cet intervalle, c'est que ce paquet n'a pas été reçu et il est transmis vers le destinataire du paquet. La table de queue est décalée de sorte que la valeur de l'identifiant reçue corresponde à la limite haute de la table de queue.

Si le récepteur reçoit un paquet avec un identifiant supérieur à T mais inférieur à T+N, la table de tête est décalée de sorte que la valeur reçue corresponde à la limite haute de la table de tête. On décale éventuellement la table de queue de façon à ce que l'espace mémoire entre les deux tables soit représentatif uniquement des identifiants non reçus.

Si le récepteur reçoit un paquet ayant un identifiant supérieur à T+N, la table de queue enjambe la table de tête et devient la nouvelle table de tête. L'identifiant reçu correspond alors à la limite haute de la nouvelle table de tête.

Enfin, dans le même but, dans une des solutions proposées, lorsque le récepteur reçoit un paquet avec un identifiant supérieur à T+N, la station réceptrice estime le nombre de paquets valides potentiellement perdus si la table est décalée. Si ce nombre est supérieur à un certain seuil, le paquet reçu est rejeté.

Les solutions proposées dans l'art antérieur ne fonctionnent bien que dans l'hypothèse d'une perturbation très limitée de l'ordonnancement des paquets de données à travers le réseau de transport.

Compte tenu des propriétés d'un DTN en termes de débit des liens réseaux, typiquement de 100 kbits/s à plusieurs Mbits/s, et de la capacité de stockage des relais du réseau, typiquement d'une minute à plusieurs heures de trafic réseau, les solutions existantes mettent en oeuvre des tables d'anti-rejeu propres à stocker un nombre très élevé d'identifiants de paquets, par exemple de l'ordre d'un million. Ceci rend problématiques à la fois la manipulation et le stockage de la table. Il s'ensuit :
- une latence introduite par le mécanisme de protection contre le rejeu susceptible d'affecter de manière significative les performances de l'équipement de sécurité,
- un risque de fausse détection du rejeu d'un paquet, et
- un risque de non détection du rejeu d'un paquet.

Le document US 2011/153862 décrit un procédé anti-rejeu visant à améliorer les procédés à fenêtre de temps finie.

Le document US 2009/158417 décrit également un procédé anti-rejeu comprenant la consultation d'une base de données.

Un but de l'invention est donc de fournir un procédé de détection d'un rejeu qui résolve ou minimise les problèmes précités.

A cet effet, l'invention a pour objet un procédé selon la revendication 1.

Selon des modes particuliers de réalisation, le procédé comprend l'une ou plusieurs des caractéristiques correspondant aux revendications 2 à 11, prises isolément ou selon toutes les combinaisons techniquement possibles.

L'invention concerne également un programme d'ordinateur selon la revendication 12.

L'invention concerne enfin une station réceptrice adaptée pour mettre en oeuvre les étapes d'un procédé tel que décrit ci-dessus.

L'invention sera mieux comprise à la lecture de la description qui va suivre, donnée uniquement à titre d'exemple et faite en se référant aux dessins annexés, sur lesquels :
- la figure 1 est une vue schématique d'une installation mettant en oeuvre un procédé selon l'invention,
- la figure 2 est une vue schématique d'un module de la station émettrice représentée sur la figure 1,
- la figure 3 est une vue schématique représentant une base de données de la station réceptrice représentée sur la figure 1,
- la figure 4 est une vue schématique représentant un algorithme des étapes du procédé selon l'invention mises en oeuvre par la station réceptrice représentée sur la figure 1.

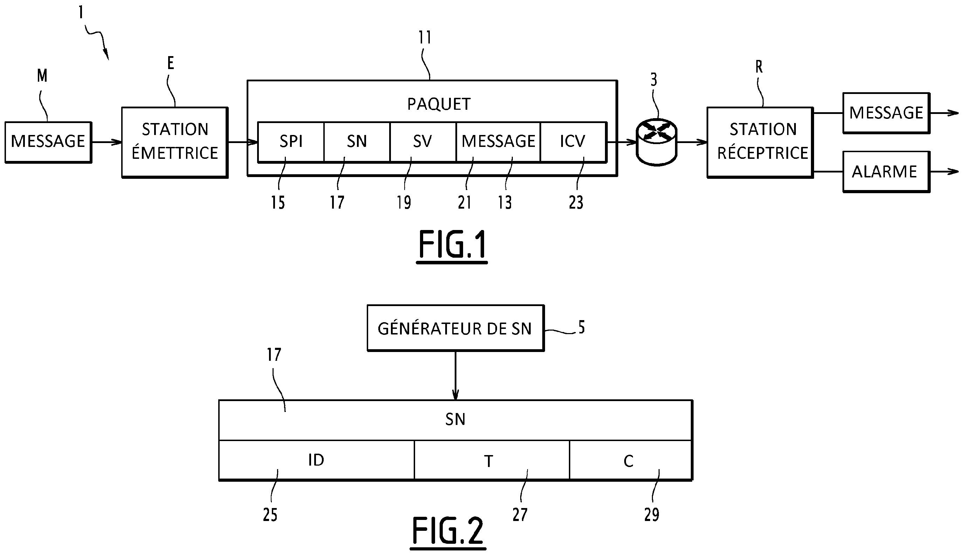

En référence à la figure 1, on décrit une installation 1 selon l'invention mettant en oeuvre un procédé selon l'invention qui sera décrit plus bas.

L'installation 1 comprend une station émettrice E adaptée pour émettre un message M via un réseau 3, et une station réceptrice R adaptée pour recevoir le message M ayant transité par le réseau 3 sous la forme d'un paquet.

Selon des variantes non représentées de l'installation 1, l'installation comprend une ou plusieurs autres stations émettrices analogues à la station émettrice E, et/ou une ou plusieurs autres stations réceptrices analogues à la station réceptrice R.

Le réseau 3 est par exemple un réseau DTN mettant en oeuvre un protocole IP. En variante, le réseau 3 met en oeuvre d'autres protocoles de communication, par exemple des protocoles de communication de niveau 2 OSI, comme Ethernet, ou de niveaux supérieurs.

La station émettrice E est par exemple un chiffreur réseau (un dispositif permettant de chiffrer et de déchiffrer un paquet), un poste de radio tactique sécurisé, ou un terminal mobile sécurisé.

Selon une variante, la station émettrice E est également réceptrice, c'est-à-dire qu'elle possède toutes les caractéristiques structurelles et fonctionnelles de la station réceptrice R.

L'invention concerne également un programme d'ordinateur, à installer dans une station réceptrice, ledit programme comportant des instructions pour mettre en oeuvre un procédé tel que défini ci-dessus lorsque les instructions sont exécutées par la station réceptrice.

L'invention concerne enfin une station réceptrice adaptée pour mettre en oeuvre les étapes d'un procédé tel que décrit ci-dessus.

L'invention sera mieux comprise à la lecture de la description qui va suivre, donnée uniquement à titre d'exemple et faite en se référant aux dessins annexés, sur lesquels :
- la figure 1 est une vue schématique d'une installation mettant en oeuvre un procédé selon l'invention,
- la figure 2 est une vue schématique d'un module de la station émettrice représentée sur la figure 1,

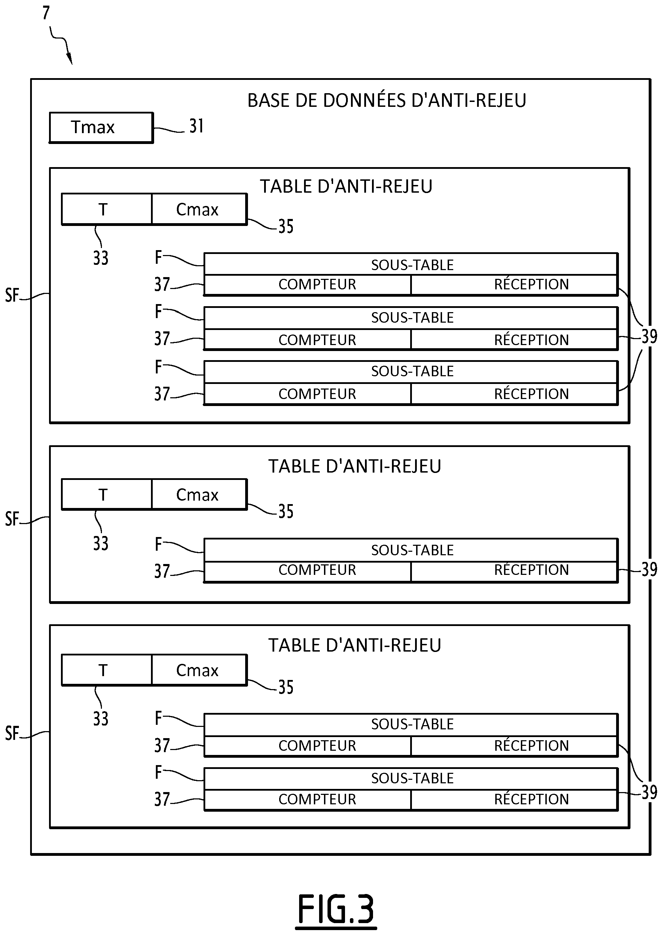

- la figure 3 est une vue schématique représentant une base de données de la station réceptrice représentée sur la figure 1,

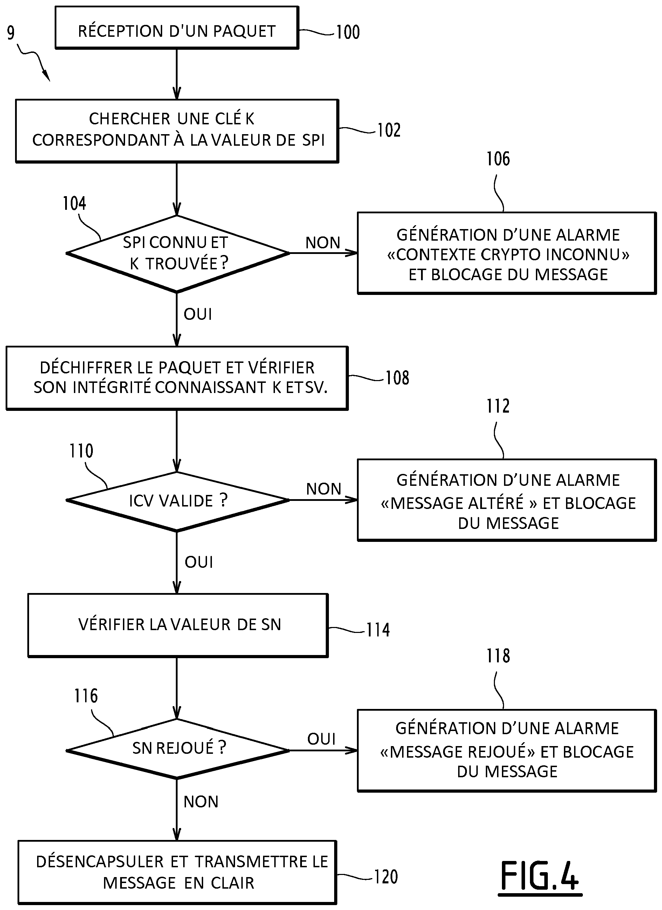

- la figure 4 est une vue schématique représentant un algorithme des étapes du procédé selon l'invention mises en oeuvre par la station réceptrice représentée sur la figure 1.

En référence à la figure 1, on décrit une installation 1 selon l'invention mettant en oeuvre un procédé selon l'invention qui sera décrit plus bas.

L'installation 1 comprend une station émettrice E adaptée pour émettre un message M via un réseau 3, et une station réceptrice R adaptée pour recevoir le message M ayant transité par le réseau 3 sous la forme d'un paquet.

Selon des variantes non représentées de l'installation 1, l'installation comprend une ou plusieurs autres stations émettrices analogues à la station émettrice E, et/ou une ou plusieurs autres stations réceptrices analogues à la station réceptrice R.

Le réseau 3 est par exemple un réseau DTN mettant en oeuvre un protocole IP. En variante, le réseau 3 met en oeuvre d'autres protocoles de communication, par exemple des protocoles de communication de niveau 2 OSI, comme Ethernet, ou de niveaux supérieurs.

La station émettrice E est par exemple un chiffreur réseau (un dispositif permettant de chiffrer et de déchiffrer un paquet), un poste de radio tactique sécurisé, ou un terminal mobile sécurisé.

Selon une variante, la station émettrice E est également réceptrice, c'est-à-dire qu'elle possède toutes les caractéristiques structurelles et fonctionnelles de la station réceptrice R.

La station émettrice E comprend un module 5 de génération de numéros de séquence représenté sur la figure 2.

La station réceptrice R est par exemple un chiffreur réseau, un poste de radio tactique sécurisé, ou un terminal mobile sécurisé.

De même, selon une variante, la station réceptrice R est également émettrice, c'est-à-dire qu'elle possède toutes les caractéristiques structurelles et fonctionnelles de la station émettrice E.

La station réceptrice R comprend une base de données 7 d'anti-rejeu dédiée à la protection contre le rejeu du trafic de données émis par la station émettrice E, et représentée sur la figure 3.

Selon un mode particulier de réalisation, la station réceptrice R a accès par tout moyen connu de l'homme du métier à la base de données 7, laquelle est de préférence physiquement comprise dans la station réceptrice. La station réceptrice R héberge avantageusement un logiciel de pilotage adapté pour la mise en oeuvre par la station réceptrice R d'un algorithme 9 représenté sur la figure 4.

Le fonctionnement de l'installation 1 va maintenant être décrit.

Comme visible sur la figure 1, la station émettrice E encapsule le message M en un paquet 11.

Les paquets 11 sont envoyés successivement dans le réseau 3 sur plusieurs périodes de temps consécutives, avantageusement de durées égales. Par exemple, les périodes de temps durent 10 minutes.

Pendant chaque période de temps, N paquets 11 sont par exemple envoyés dans le réseau 3, N étant un entier naturel, de préférence une puissance de deux.

Chaque paquet 11 comprend avantageusement un champ 15 contenant un index SPI (en anglais : *Security Parameter Index*). L'index SPI permet d'identifier de manière unique, un contexte cryptographique utilisé par la station émettrice E pour réaliser la protection en confidentialité et/ou en intégrité des champs 17 SN et 21 contenant le message. Le contexte cryptographique auquel renvoie l'index SPI comprend par exemple une clé secrète K partagée à l'avance entre la station émettrice E et la station réceptrice R.

Chaque paquet 11 comprend également un champ 17 contenant un identifiant SN (en anglais : *Sequence Number*). L'identifiant SN permet de protéger le paquet 11 contre le rejeu. Le procédé garantit l'unicité de la valeur de l'identifiant SN pour chaque paquet 11.

Chaque paquet 11 comprend optionnellement un champ 19 contenant un vecteur d'initialisation SV.

Chaque paquet 11 comprend aussi un champ 21 contenant le message M. Le champ 21 contenant le message peut être protégé en confidentialité. Le chiffrement du champ 21 contenant le message exploite la valeur du champ SV 19 et une clé secrète K partagée identifiée par l'index SPI.

Chaque paquet 11 comprend enfin un champ 23 contenant un motif d'intégrité ICV (en anglais : *Integrity Check Value*). Le champ ICV 23 permet de protéger en intégrité le champ SN 17 et le champ 21 contenant le message. Le calcul du champ ICV 23 exploite la valeur du champ SV 19 et une clé secrète K partagée identifiée par l'index SPI..

Les champs 15, 17, 19 et 23 sont avantageusement de taille fixe, c'est à dire la même taille pour tous les paquets.

Le champ 15 s'étend par exemple sur 32 bits.

Le champ 17 s'étend par exemple sur 32 bits.

Le champ 19 s'étend par exemple sur 128 bits.

Le champ 21 est de taille variable..

Le champ 23 s'étend par exemple sur 32, 64, 80 ou 128 bits.

Le champ SV est optionnel. L'unicité de l'identifiant SN étant garantie par le procédé, selon une variante, l'identifiant SN est utilisé comme vecteur d'initialisation.

Le vecteur d'initialisation SV est unique pour une clé K donnée. Un générateur de nombres aléatoires de bonne qualité est par exemple utilisé pour générer la valeur du vecteur d'initialisation SV et garantir son unicité.

L'unicité de l'identifiant SN étant garantie par le procédé, selon une variante, l'identifiant SN est utilisé comme vecteur d'initialisation.

L'identifiant SN comprend un indicateur temporel T représentatif de la période de temps pendant laquelle le paquet 11 a été émis, et un indicateur de comptage C représentatif d'un ordre d'émission du paquet à l'intérieur de la période de temps pendant laquelle le paquet a été émis.

La valeur de l'identifiant SN est obtenue à l'aide du module 5 de génération de numéros de séquence (figure 2) dont le principe de fonctionnement est décrit ci-après.

Le champ 17 contenant l'identifiant SN est rempli par le module 5 qui génère :
- un identifiant source qui occupe par exemple une partie haute 25 du champ 17,
- l'indicateur temporel T qui occupe par exemple une partie intermédiaire 27 du champ 17, et
- l'indicateur de comptage C occupant par exemple une partie basse 29 du champ 17.

La partie haute 25, la partie intermédiaire 27 et la partie basse 29 sont avantageusement de taille fixe.

Avantageusement, l'identifiant source identifie de manière unique la station émettrice E parmi d'autres stations émettrices (non représentées).

L'indicateur temporel T est représentatif de la période temporelle pendant laquelle est émis le paquet 11. Il n'est pas nécessaire de transmettre une référence horaire complète de la station émettrice E. Quelques bits suffisent à la station réceptrice R, si nécessaire, pour déduire la référence horaire complète de la station émettrice E. Tous les paquets 11 émis dans la même période de temps prise parmi les périodes de temps consécutives mentionnées plus haut ont le même indicateur temporel T. C'est en cela que l'indicateur temporel T est représentatif de la période temporelle.

Plus généralement, dans la présente demande, on entend qu'un paramètre est représentatif d'une notion si une table de correspondance existe entre ce paramètre et cette notion.

Le compteur fournissant l'indicateur de comptage C est par exemple initialisé au moment du changement de la clé secrète K et à chaque changement de l'indicateur temporel T. Le compteur fournissant l'indicateur de comptage C s'incrémente ensuite à chaque émission d'un paquet 11.

La base de données 7 est configurée pour mémoriser les identifiants SN ayant déjà été reçus. Comme on le verra ci-dessous, la mémorisation des identifiants SN déjà reçus est soit explicite, soit implicite.

Par « explicite », on entend que l'information selon laquelle l'identifiant SN a été reçu est stockée dans la base de données 7, par exemple grâce à un bit par identifiant reçu..

Par « implicite », on entend que l'information selon laquelle l'identifiant SN a été reçu est déduite d'informations stockées dans la base de données 7. Cette information est obtenue à l'issue d'un ou plusieurs tests logiques portant sur des champs de la base de données 7. Par exemple, la mémorisation implicite est réalisée en mémorisant que des plages d'identifiants ont été déjà reçus. La mémorisation implicite est par exemple réalisée à partir des indicateurs Tmax et Cmax et de l'absence d'une table SF ou d'une sous-table SF dans la base de données 7.

La base de données 7 comprend un champ 31 contenant un indicateur temporel maximal Tmax, et une ou plusieurs tables SF d'anti-rejeu.

L'indicateur temporel maximal Tmax est représentatif du maximum des indicateurs temporels T des paquets 11 déjà reçus.

Chaque table SF est adaptée pour la mémorisation des identifiants SN des paquets 11 émis pendant l'une des périodes de temps. Chaque table SF est respectivement dédiée à l'une des périodes de temps pendant lesquelles les paquets 11 sont envoyés par la station émettrice E.

Chaque table SF comprend un champ 33 contenant l'indicateur temporel T auquel elle est dédiée, et une ou plusieurs sous-tables F adaptées à la mémorisation des indicateurs de comptage C.

Chaque table SF comprend aussi un champ 35 contenant un indicateur de comptage maximal Cmax.

Au sein de la base de données 7, les tables SF sont disjointes deux à deux. Il n'existe pas deux tables SF distinctes ayant le même indicateur temporel T dans le champ 33. Ainsi, une table SF est identifiée de manière unique au sein de la base de données 7 par son champ 33.

L'indicateur de comptage maximal Cmax des tables SF est représentatif de la sous-table F existante, ou ayant existée, dans laquelle est mémorisé, ou a été mémorisé, l'indicateur de comptage C le plus élevé déjà reçu pour un paquet 11 émis pendant la période de temps dont l'indicateur temporel T de la table SF est représentatif.

Chaque sous-table F comprend un champ 37 contenant un identifiant de la sous-table, et un champ 39 adapté pour mémoriser les indicateurs de comptage C des identifiants SN déjà reçus. Chaque sous-table F est respectivement dédiée à un intervalle (i. e. une plage) d'indicateurs de comptage C. L'intervalle est avantageusement de longueur fixe. Par exemple, une sous-table F stocke 64 valeurs consécutives d'indicateurs de comptage C.

Dans chaque table SF, les sous-tables F sont disjointes deux à deux. Il n'existe pas deux sous-tables F ayant le même identifiant dans leurs champs 37 respectifs. Ainsi, chaque sous-table F d'une table SF est identifiée de manière unique au sein de la table SF par son champ 37.

L'indicateur de comptage maximal Cmax contenu dans le champ 35 de chaque table SF est par exemple égal à la valeur maximale contenue dans les champs 37 des sous-tables F que la table SF contient ou a contenues.

Le champ 39 est avantageusement adapté pour contenir des indicateurs de comptage C appartenant à un intervalle correspondant à N paquets émis successivement dans la même période de temps. Par exemple, il s'agit d'un champ de N bits, avec N avantageusement égal à 64 ou 4096.

Par exemple, un bit à 0 dans le champ 39 signifie que l'indicateur de comptage C dont la valeur correspond à l'emplacement de ce bit n'a pas été reçu. Inversement, un bit à 1 dans le champ 39 signifie que l'indicateur de comptage C dont la valeur correspond à l'emplacement de ce bit a été reçu.

Au sein d'une sous-table F, le premier bit du champ 39 correspond à un indicateur de comptage C de valeur égale à la valeur du champ 37.

Tous les champs de la base de données 7 ont avantageusement une taille fixe, y compris ceux des tables SF et des sous-tables F.

Le fonctionnement de l'installation 1, c'est-à-dire un procédé selon l'invention, va maintenant être décrit.

La station émettrice E (figure 1) crée puis envoie les paquets 11 dans le réseau 3. Les paquets 11 sont identifiées de manière unique par l'identifiant SN représentatif d'un ordre d'émission. Mais, du fait du fonctionnement interne du réseau 3, les paquets 11 parviennent à la station réceptrice R dans un ordre différent de l'ordre d'émission. En outre, le risque existe qu'un ou plusieurs paquets 11 soient interceptées et rejouées par un attaquant disposant d'un accès physique au réseau 3.

La station réceptrice R met en oeuvre l'algorithme 9 schématisé sur la figure 4.

L'algorithme 9 comprend tout d'abord une étape 100 de réception d'un paquet 11.

Dans une étape 102, la station réceptrice R lit le paquet 11 reçu. La station réceptrice R obtient l'index SPI contenu dans le champ 15 (figure 1).

La station réceptrice R réalise ensuite un test 104 de reconnaissance de l'index SPI et de recherche de la clé secrète K.

Si l'index SPI n'est pas reconnu et qu'aucune clé secrète K n'est trouvée, la station réceptrice R passe à une étape 106 comprenant la génération d'une alarme pour signifier que le contexte cryptographique est inconnu. En outre, la station réceptrice R bloque le paquet 11 et le message M qu'il contient.

Si l'index SPI est reconnu et qu'une clé secrète K correspondante est trouvée, la station réceptrice R passe à une étape 108 comprenant avantageusement un déchiffrement et la vérification d'intégrité du paquet 11.

Pour la vérification d'intégrité, la station réceptrice R calcule un motif d'intégrité à partir des champs du paquet protégé en intégrité par la station émettrice, de la clé secrète K et du vecteur d'initialisation SV contenu dans le champs 19 du paquet. Si le motif d'intégrité calculé n'est pas égal au motif d'intégrité ICV contenu dans le champ 23 du paquet 11, alors la station réceptrice R passe à une étape 112 de génération d'une alarme pour signifier que le paquet 11 est altéré et bloque le paquet et le message M qu'il contient.

Si le motif d'intégrité calculé est égal au motif d'intégrité ICV, la station réceptrice R réalise une étape 114 de vérification de l'identifiant SN reçu.

Si le résultat de l'étape 114 est que l'identifiant SN reçu est considéré comme rejoué, alors la station réceptrice R passe à une étape 118 de génération d'une alarme pour signifier que le paquet de le paquet 11 a été rejoué et bloque le message M.

Si le résultat de l'étape 114 est que l'identifiant SN reçu est considéré comme non rejoué, alors la station réceptrice R passe à une étape 120 d'extraction du message M du paquet 11, et de transmission du paquet.

L'étape de vérification 114 comporte une sous-étape (non représentée) de consultation de la base de données 7 d'identifiants déjà reçus pour déterminer si l'identifiant (SN) reçu a déjà été reçu, et une sous étape (non représentée) de mise à jour de la base de données 7.

Optionnellement, si l'indicateur temporel T de l'identifiant SN reçu indique que le paquet 11 a été émis depuis une durée supérieure à un seuil, alors le paquet 11 est refusé sans consultation de la base de données 7. Le seuil est défini en fonction de la durée de vie des messages M. Par exemple, le seuil vaut deux heures.

A la sous-étape de consultation, le paquet 11 est considéré comme ayant été déjà reçu si l'indicateur temporel T de l'identifiant SN reçu est inférieur ou égal à l'indicateur temporel maximal Tmax et s'il n'existe pas dans la base de données 7 une table SF spécifique de la période temporelle dont l'indicateur temporel T est représentatif. Dans ce cas, l'identifiant SN reçu est implicitement contenu dans la base de données 7. Malgré l'absence d'une table SF susceptible de contenir explicitement l'identifiant SN reçu, l'identifiant SN reçu est considéré comme ayant déjà été reçu. La raison d'une telle absence sera donnée plus bas.

Le paquet 11 est également considéré comme ayant été déjà reçu si :
- l'indicateur temporel T de l'identifiant SN reçu est inférieur ou égal à l'indicateur temporel maximal Tmax,
- il existe dans la base de données 7 une table SF spécifique de la période temporelle dont l'indicateur temporel T est représentatif, et
- il existe dans ladite table SF une sous-table F ayant déjà mémorisé l'indicateur de comptage C.

Dans ce cas, l'identifiant SN reçu est déjà explicitement contenu dans la base de données 7.

Le paquet 11 est également considéré comme ayant été déjà reçu si :
- il existe dans la base de données une table SF spécifique de la période temporelle dont l'indicateur temporel T est représentatif,
- il n'existe pas dans ladite table SF une sous-table F contenant l'indicateur de comptage C, et
- l'indicateur de comptage C se situe dans un intervalle (de longueur égale à 64 par exemple) dont la borne inférieure est inférieure ou égale à l'indicateur de comptage maximal Cmax de ladite table SF.

Il s'agit d'un second cas de mémorisation implicite de l'identifiant SN dans la base de données 7. La mémorisation est implicite du fait que, malgré l'absence d'une sous-table F susceptible de contenir l'indicateur de comptage C reçu, l'identifiant SN reçu est néanmoins considéré comme ayant déjà été reçu.

Dans tous les autres cas, l'identifiant SN reçu est considéré comme n'ayant pas déjà été reçu, c'est-à-dire comme non rejoué.

La sous-étape de mise à jour de la base de données 7 dépend du résultat de la sous-étape de consultation.

Si l'identifiant SN reçu est considéré comme ayant été déjà reçu, il n'y a aucune mise à jour particulière de la base de données 7.

Si l'identifiant SN reçu est considéré comme reçu pour la première fois, alors il est mémorisé dans la base de données 7 de la manière suivante.

S'il n'existe pas de table SF susceptible de mémoriser l'identifiant SN reçu, une nouvelle table SF susceptible de mémoriser l'identifiant SN reçu est créée dans la base de données 7. En outre, l'indicateur temporel maximal Tmax est mis à jour pour prendre la valeur de l'indicateur temporel T. Le cas échéant, de nouvelles tables SF sont créées dans la base de données 7 pour couvrir les périodes de temps situées entre la période de temps correspondant à l'ancienne valeur de l'indicateur temporel maximal Tmax (avant sa mise à jour) et la période de temps correspondant à la nouvelle valeur de l'indicateur temporel maximal Tmax (après sa mise à jour).

L'indicateur de comptage C de l'identifiant SN reçu est mémorisé dans la sous-table F dédiée à la plage de valeurs dans laquelle se trouve l'indicateur de comptage C. S'il n'existe pas de sous-table F susceptible de mémoriser l'indicateur de comptage C, une nouvelle sous-table F susceptible de mémoriser l'indicateur de comptage C est crée dans la base de données 7. Si l'indicateur de comptage C est supérieur à l'indicateur de comptage maximal Cmax, alors l'indicateur de comptage maximal Cmax est augmenté pour prendre la valeur du champ 37 de la sous table crée pour stocker l'indicateur de comptage C.

Le cas échéant, de nouvelles sous-table SF sont créées dans la base de données 7 pour couvrir les plages d'indicateurs de comptage C situées entre la plage correspondant à l'ancienne valeur de l'indicateur de comptage maximal Cmax (avant sa mise à jour) et la plage correspondant à la nouvelle valeur de l'indicateur de comptage maximal Cmax (après sa mise à jour).La station réceptrice R réalise en outre une étape de gestion (non représentée) de la base de données comprenant un effacement conditionnel de l'une quelconque des sous-tables F si la sous-table F est pleine.

Par « pleine », on entend que tous les paquets qui sont d'une part émis pendant la période temporelle de la table SF contenant ladite sous-table F et qui ont d'autre part un indicateur de comptage C compris dans la plage successive de ladite sous-table F ont été reçus. Par exemple, tous les bits du champ 39 de la sous-table F pleine valent « 1 ».

Avantageusement, l'étape de gestion comprend aussi un effacement conditionnel de l'une quelconque des tables SF si tous les paquets émis pendant la période temporelle de ladite table ont été reçus.

Avantageusement, l'étape de gestion comprend aussi un effacement conditionnel de l'une quelconque des tables SF si l'indicateur temporel T (champ 33) de la table SF indique que la table SF est trop ancienne, i. e. qu'une durée supérieure à un certain seuil s'est écoulée depuis la période de temps dont l'indicateur temporel T de la table SF est représentatif.

Optionnellement, afin de libérer de l'espace mémoire, lorsque l'espace mémoire allouée au stockage de la base de donnes 7 est saturé :
- si la base de données 7 comprend plusieurs tables SF, alors la table SF la plus ancienne (ayant la valeur la plus faible de l'indicateur temporel T) est supprimée de la base de données 7,
- sinon, la sous-table F la plus ancienne (ayant l'identifiant le moins élevé dans le champ 37) est supprimée.

Enfin, pour réduire à son minimum l'espace mémoire occupée par la base de données 7, celle-ci est compressée.

Le contenu de la base de données 7, notamment l'indicateur de réception du champ 39 des sous-tables F, se caractérise par une majorité de bits à 1 (paquets reçus) et une répartition aléatoire de bits à 0 (paquets non reçus ou perdus), correspondant au taux de perte de paquets par le réseau 3, qui est par exemple d'environ 20% des paquets émis.

Optionnellement, un algorithme de compression sans perte de données est mis en oeuvre, par exemple un codage de Huffman. L'algorithme préserve la structure de données de la base de données 7. Seul le contenu des tables SF est compressé. Pour chaque table SF, toutes les tables F sont concaténées et compressées en un seul bloc de données.

Ceci permet un accès direct à chaque table SF à partir de la base de données 7 sous sa forme compressée.

Un programme d'instructions logicielles est avantageusement stocké dans la station réceptrice R. Lorsque la station réceptrice R exécute le programme, elle met en oeuvre les étapes 100 à 120 décrite ci-dessus, ainsi que l'étape de gestion de la base de données.

Le programme est par exemple exécuté au sein d'une architecture microprocesseur de la station de réception R comprenant :
- un ou plusieurs coeurs microprocesseurs, par exemple CPU ARM CORTEX A15,
- une mémoire volatile, par exemple DDR SDRAM,
- une mémoire non volatile de forte capacité, par exemple une mémoire Flash,
- une mémoire volatile sauvegardée, par exemple NVRAM, et
- un ou plusieurs ports d'entrée/sortie, permettant la réception et l'émission de paquets de données protégés contre le rejeu.

La base de données 7 est avantageusement complètement archivée sous sa forme compressée dans la mémoire Flash. L'utilisation d'un système d'exploitation incluant un système de fichiers permet de faciliter et d'optimiser l'exploitation de la mémoire Flash.

Les éléments de la base de données 7 modifiés, et non encore archivés et compressés en mémoire Flash, sont avantageusement sauvegardés dans la mémoire NVRAM, qui est non volatile.

L'état courant de la base de données 7 est alors obtenu par une combinaison du contenu des mémoires Flash (archive complète compressée) et NVRAM (éléments modifiés par rapport au contenu de l'archive compressée).

En cas de coupure brutale de l'alimentation électrique dans tout ou partie de la station réceptrice R, l'état de la base de données 7 est préservé. Au démarrage suivant, un processus simple de reconstruction de l'état de la base de données, combinant les informations archivées en mémoire Flash et sauvegardée en mémoire NVRAM, permet un retour rapide de la station réceptrice R à l'état opérationnel.

Lorsque la mémoire NVRAM est pleine, ou de manière périodique, par exemple toutes les deux minutes, la base de données 7 archivée et compressée en mémoire Flash est mise à jour et la NVRAM est vidée.

Ceci permet de prolonger la durée de vie de la mémoire Flash non volatile par une réduction du nombre de cycles d'écriture, et d'optimiser l'utilisation de la faible capacité de la mémoire NVRAM.

Grâce aux caractéristiques décrites ci-dessus, la taille de la base de données 7 est réduite. Ceci réduit la latence introduite par le mécanisme de protection contre le rejeu , le risque de fausse détection du rejeu d'un paquet, et le risque de non détection du rejeu d'un paquet.

La solution proposée ne dégrade en outre pas les performances du réseau 3.

Le procédé selon l'invention est adapté pour se combiner efficacement avec une protection de type IPSEC AH et ESP, grâce à la mutualisation des mécanismes d'encapsulation protocolaire et cryptographiques.

Le procédé est compatible avec différents modes de diffusion : point à point, et point à multipoint.

Le procédé est applicable à d'autres protocoles de communication qu'IP, par exemple aux protocoles de communication de niveau 2 OSI, par exemple Ethernet, ou de niveaux supérieurs.

Le procédé selon l'invention permet de manipuler des sous-tables F d'anti-rejeu de petite taille, typiquement de 64 bits, tout en conservant la trace de nombreux paquets reçus. Cette taille est compatible avec les architectures microprocesseur du moment, et permet d'optimiser les accès aux sous-tables F et leur manipulation. Le procédé permet également de manipuler des sous-tables d'anti-rejeu de plus grande taille, typiquement de 4096 bits, afin de tirer partie des mécanismes de cache des architectures processeur modernes et de la taille importante des blocs mémoires de type Flash NOR/NAND.

L'implémentation matérielle du procédé est adaptée aux performances des technologies couramment employées dans un équipement de sécurité de type infrastructure, notamment en termes de capacité des mémoires (SDRAM, SRAM sauvegardée, NVRAM et Flash) et de vieillissement de ces mémoires (Flash NOR et NAND en particulier).

## Revendications

1. Procédé pour détecter si un paquet (11) d'une pluralité de paquets émis par au moins une station émettrice (E) au travers d'un réseau (3) a été rejoué, chaque paquet (11) comprenant un message (M) et un identifiant (SN) du paquet (11), la pluralité de paquets étant émis successivement sur plusieurs périodes de temps consécutives, le procédé comprenant les étapes suivantes :
- réception (100) par au moins une station réceptrice (R) du paquet (11) et lecture de l'identifiant (SN) du paquet (11) reçu pour obtenir un identifiant (SN) reçu,
- consultation (114) par la station réceptrice (R) d'une base de données (7) d'identifiants ayant déjà été reçus pour déterminer si l'identifiant (SN) reçu a déjà été reçu, et
- si l'identifiant (SN) reçu n'a pas déjà été reçu, mise à jour de la base de données (7) comprenant une mémorisation de l'identifiant (SN) reçu,
**caractérisé en ce que** :
- l'identifiant (SN) comprend un indicateur d'appartenance à des groupes de paquets,
- la base de donnée (7) comprend une ou plusieurs sous-tables (F) adaptées à la mémorisation des identifiants (SN) des paquets ayant déjà été reçus, chaque sous-table (F) étant respectivement dédiée à l'un des groupes, et
- le procédé comprend en outre une étape de gestion de la base de données (7) comprenant un effacement conditionnel de l'une quelconque des sous-tables (F) si tous les paquets du groupe auquel ladite sous-table (F) est dédiée ont été reçus.

2. Procédé selon la revendication 1, **caractérisé en ce que** :
- l'indicateur d'appartenance comprend un indicateur de comptage (C) représentatif d'un ordre d'émission dudit paquet (11),
- la ou les sous-tables (F) est ou sont adaptée(s) à la mémorisation des indicateurs de comptage (C) appartenant respectivement à un intervalle ou à des intervalles successifs d'indicateurs de comptage, chaque sous-table (F) étant dédiée respectivement à l'une desdites plages successives, et
- l'étape de gestion de la base de données (7) comprend un effacement conditionnel de l'une quelconque des sous-tables (F) si la sous-table (F) est pleine.

3. Procédé selon la revendication 2, **caractérisé en ce que** :
- l'indicateur d'appartenance comprend en outre un indicateur temporel (T) représentatif de la période de temps pendant laquelle le paquet (11) a été émis, l'indicateur de comptage (C) étant représentatif d'un ordre d'émission dudit paquet (11) à l'intérieur de la période de temps pendant laquelle le paquet (11) a été émis,
- la base de donnée (7) comprend une ou plusieurs tables (SF), chaque table (SF) étant respectivement adaptée pour la mémorisation des identifiants (SN) des paquets émis pendant l'une des périodes de temps, chaque table (SF) étant dédiée respectivement à l'une des périodes de temps, et
- chaque table (SF) comprend une ou plusieurs des sous-tables (F).

4. Procédé selon la revendication 3, **caractérisé en ce que** l'étape de gestion de la base de données (7) comprend un effacement conditionnel de l'une quelconque des tables (SF) si tous les paquets émis pendant la période temporelle de ladite table (SF) ont été reçus.

5. Procédé selon la revendication 3 ou 4, **caractérisé en ce que** l'étape de gestion de la base de données (7) comprend un effacement conditionnel de l'une quelconque des tables (SF) si le temps écoulé entre la période de temps spécifique à ladite table (SF) et un indicateur de temps courant est supérieur à une valeur donnée.

6. Procédé selon l'une quelconque des revendications 3 à 5, **caractérisé en ce que** la base de données (7) comprend un indicateur temporel maximal (Tmax) représentatif du maximum des indicateurs temporels des paquets déjà reçus, et chaque table (SF) comprend un indicateur de comptage maximal (Cmax) représentatif de l'intervalle d'indicateurs de comptage (C) le plus élevé de tous les identifiants (SN) ayant déjà été mémorisés dans ladite table (SF), et **en ce que**, à l'étape de consultation, le paquet (11) est considéré comme ayant été déjà reçu si l'indicateur temporel (T) est inférieur ou égal à l'indicateur temporel maximal (Tmax) et si :
- il n'existe pas dans la base de données (7) une table (SF) spécifique de la période temporelle dont l'indicateur temporel (T) est représentatif, ou
- il existe dans la base de données (7) une table (SF) spécifique de la période temporelle dont l'indicateur temporel (T) est représentatif, et il existe dans ladite table (SF) une sous-table (F) ayant déjà mémorisé l'indicateur de comptage (C), ou
- il existe dans la base de données (7) une table (SF) spécifique de la période temporelle dont l'indicateur temporel (T) est représentatif, et il n'existe pas dans ladite table (SF) une sous-table (F) contenant l'indicateur de comptage (C), et l'indicateur de comptage (C) est inférieur ou égal à l'indicateur de comptage maximal (Cmax) de ladite table (SF).

7. Procédé selon l'une quelconque des revendications 3 à 6, **caractérisé en ce qu'**il comprend en outre une étape (108) de vérification de l'intégrité d'au moins l'identifiant (SN) reçu, et de génération (112) d'une alarme si l'identifiant (SN) reçu n'est pas intègre.

8. Procédé selon la revendication 7, **caractérisé en ce que** chaque paquet (11) comprend un paramètre de sécurité (SPI) représentatif d'une clé secrète (K) partagée entre l'émetteur (E) et le station réceptrice (R), la clé secrète (K) étant utilisée dans l'étape (108) de vérification de l'intégrité.

9. Procédé selon l'une quelconque des revendications 3 à 8, **caractérisé en ce que** la station réceptrice (R) est adaptée pour recevoir des paquets en provenance de plusieurs stations émettrices (E) et pour consulter plusieurs bases de données (7) d'identifiants déjà reçus, l'identifiant (SN) reçu comprenant un indicateur (ID) représentatif de la station émettrice (E) ayant émis le paquet (11) reçue, la base de données (7) consultée à l'étape de consultation (114) étant choisie en fonction de l'indicateur (ID) de l'identifiant (SN) reçu.

10. Procédé selon l'une quelconque des revendications 3 à 9, **caractérisé en ce que**, dans la base de données (7), pour chaque table (SF), les sous-tables (F) de la table (SF) sont concaténées et compressés en un seul bloc de données.

11. Procédé selon l'une quelconque des revendications 3 à 10, **caractérisé en ce que** la station réceptrice (R) met en oeuvre :
- une mémoire Flash dans laquelle la base de données (7) est archivée intégralement, de préférence dans un état compressé,
- une mémoire vive volatile comportant une copie au moins partielle de la base de données (7), et
- une mémoire non volatile, de préférence une mémoire NVRAM, comportant des parties de la base de données (7) mises à jour pendant l'étape de mise à jour et non encore archivées dans la mémoire Flash.

12. Programme d'ordinateur à installer dans une station réceptrice (R), ledit programme comportant des instructions pour mettre en oeuvre un procédé selon l'une quelconque des revendications 1 à 11 lorsque les instructions sont exécutées par la station réceptrice (R).

## Patentansprüche

1. Verfahren zum Detektieren, ob ein Datenpaket (11) einer Mehrzahl von Datenpaketen, die von mindestens einer Sendestation (E) über ein Netz (3) gesendet werden, wieder eingespielt wurde, wobei jedes Datenpaket (11) eine Mitteilung (M) und eine Kennung (SN) des Datenpakets (11) umfasst, wobei die Mehrzahl von Datenpaketen aufeinanderfolgend über mehrere konsekutive Zeitintervalle gesendet werden, wobei das Verfahren die folgenden Schritte umfasst:
- Empfangen (100) des Datenpakets (11) von mindestens eine Empfangsstation (R) und Lesen der Kennung (SN) des empfangenen Datenpakets (11) um eine Empfangskennung (SN) zu erhalten,
- Befragen (114) einer Datenbank (7) von Kennungen durch die Empfangsstation (R), die schon empfangen wurden, um zu bestimmen, ob die Empfangskennung (SN) schon empfangen wurde, und
- wenn die Empfangskennung (SN) noch nicht empfangen wurde, Aktualisieren der Datenbank (7), das eine Speicherung der Empfangskennung (SN) umfasst,
**dadurch gekennzeichnet, dass**:
- die Kennung (SN) einen Indikator der Zugehörigkeit zu Datenpaketgruppen umfasst,
- die Datenbank (7) eine oder mehrere Untertabellen (F) umfasst, die zur Speicherung der Kennungen (SN) der schon empfangenen Datenpakete angepasst sind, wobei jede Untertabelle (F) jeweils einer der Gruppe zugeordnet ist, und
- das Verfahren außerdem einen Schritt zum Verwalten der Datenbank (7) umfasst, der eine bedingte Löschung einer beliebigen Untertabelle (F) umfasst, wenn alle Datenpakete der Gruppe, der die Untertabelle (F) zugeordnet ist, empfangen wurden.

2. Verfahren nach Anspruch 1, **dadurch gekennzeichnet, dass**:
- der Zugehörigkeitsindikator einen Zählindikator (C) umfasst, der für die Reihenfolge des Sendens des Datenpakets (11) repräsentativ ist,
- die Untertabelle(n) (F) an die Speicherung der Zählindikatoren (C), die jeweils einem Intervall oder aufeinanderfolgenden Intervallen von Zählindikatoren gehören, angepasst ist oder sind, wobei jede Untertabelle (F) jeweils einem der aufeinanderfolgenden Bereiche zugeordnet ist, und
- der Schritt des Verwaltens der Datenbank (7) eine bedingte Löschung einer beliebigen der Untertabellen (F) umfasst, wenn die Untertabelle (F) voll ist.

3. Verfahren nach Anspruch 2, **dadurch gekennzeichnet, dass**:
- der Zugehörigkeitsindikator außerdem einen Zeitindikator (T) umfasst, der repräsentativ für das Zeitintervall ist, während dem das Datenpaket (11) gesendet wurde, wobei der Zählindikator (C) für eine Reihenfolge des Sendens des Datenpakets (11) innerhalb des Zeitintervalls ist, während dem das Datenpaket (11) gesendet wurde,
- die Datenbank (7) eine oder mehrere Tabelle (SF) umfasst, wobei jede Tabelle (SF) jeweils zur Speicherung von Kennungen (SN) der gesendeten Pakete während eines der Zeitintervalle angepasst ist, wobei jede Tabelle (SF) jeweils eines der Zeitintervalle zugeordnet ist, und
- jede Tabelle (SF) eine oder mehrere Untertabellen (F) umfasst.

4. Verfahren nach Anspruch 3, **dadurch gekennzeichnet, dass** der Schritt des Verwaltens der Datenbank (7) eine bedingte Lösung einer beliebigen der Tabelle (SF) umfasst, wenn alle während des Zeitintervalls gesendeten Datenpakete der Tabelle (SF) empfangen wurden.

5. Verfahren nach Anspruch 3 oder 4, **dadurch gekennzeichnet, dass** der Schritt des Verwaltens der Datenbank (7) eine bedingte Löschung einer beliebigen der Tabelle (SF) umfasst, wenn die zwischen dem spezifischen Zeitintervall der Tabelle und einem aktuellen Zeitindikator abgelaufene Zeit größer als ein gegebener Wert ist.

6. Verfahren nach einem beliebigen der Ansprüche 3 bis 5, **dadurch gekennzeichnet, dass** die Datenbank (7) einen maximalen Zeitindikator (Tmax) umfasst, der für das Maximum der Zeitindikatoren der schon empfangenen Datenpakete repräsentativ ist, und jede Tabelle (SF) einen maximalen Zählindikator (Cmax) umfasst, der repräsentativ für das Intervall der Zählindikatoren ist, das von allen Kennungen (SN), die schon in der Tabelle (SF) gespeichert wurden, am höchsten ist, und dass beim Schritt des Befragens das Datenpaket (11) als schon empfangen angesehen wird, wenn der Zeitindikator (T) kleiner oder gleich dem maximalen Zeitindikator (Tmax) ist und wenn:
- in der Datenbank (7) keine spezifische Tabelle (SF) der Zeitperiode existiert, für die der Zeitindikator (T) repräsentativ ist, oder
- in der Datenbank (7) eine spezifische Tabelle (SF) für das Zeitintervall existiert, für das der Zeitindikator (T) repräsentativ ist, und in der Tabelle (SF) eine Untertabelle (F) existiert, die schon den Zählindikator (C) gespeichert hat, oder
- in der Datenbank (7) eine spezifische Tabelle (SF) des Zeitintervalls existiert, für das der Zeitindikator (T) repräsentativ ist, und in der Tabelle (SF) keine Untertabelle (F) existiert, die den Zählindikator (C) enthält, und der Zählindikator (C) kleiner oder gleich dem maximalen Zählindikator (Cmax) der Tabelle (SF) ist.

7. Verfahren nach einem beliebigen der Ansprüche 3 bis 6, **dadurch gekennzeichnet, dass** es außerdem einen Schritt (108) des Prüfens der Integrität mindestens einer empfangenen Kennung (SN) und des Erzeugens (112) eines Alarms, wenn die empfangene Kennung (SN) nicht integer ist, umfasst.

8. Verfahren nach Anspruch 7, **dadurch gekennzeichnet, dass** jedes Datenpaket (11) einen Sicherheitsparameter (SPI) umfasst, der repräsentativ für einen geheimen Schlüssel (K) ist, der zwischen dem Sender (E) und der Empfangsstation (R) geteilt wird, wobei der geheime Schlüssel (K) bei dem Schritt (108) des Prüfens der Integrität verwendet wird.

9. Verfahren nach einem beliebigen der Ansprüche 3 bis 8, **dadurch gekennzeichnet, dass** die Empfangsstation (R) angepasst ist, Pakete von mehreren Sendestationen zu empfangen und mehrere Datenbanken (7) von schon empfangenen Kennungen zu befragen, wobei die empfangene Kennung (SN) einen für die Sendestation (E), die das empfangene Datenpaket (11) gesendet hat, repräsentativen Indikator (ID) umfasst, wobei die bei dem Schritt des Befragens (114) befragte Datenbank (7) abhängig von dem Indikator der empfangenen Kennung (SN) gewählt wird.

10. Verfahren nach einem beliebigen der Ansprüche 3 bis 9, **dadurch gekennzeichnet, dass** in der Datenbank (7) für jede Tabelle (SF) die Untertabellen (F) der Tabelle (SF) in einem einzigen Datenblock verknüpft und komprimiert sind.

11. Verfahren nach einem beliebigen der Ansprüche 3 bis 10, **dadurch gekennzeichnet, dass** die Empfangsstation (R) umsetzt:
- einen Flashspeicher, in dem die Datenbank (7) vollständig, vorzugsweise in einem komprimierten Zustand, archiviert wird,
- einen flüchtigen Schreib-Lesespeicher, der mindestens eine Teilkopie der Datenbank (7) aufweist, und
- einen nichtflüchtigen Speicher, vorzugsweise einen NVRAM-Speicher, der Teile der Datenbank (7) aufweist, die während des Schritts des Aktualisierens aktualisiert wurden und noch nicht in dem Flashspeicher archiviert sind.

12. Rechnerprogramm, das in einer Empfangsstation (R) zu installieren ist, wobei das Rechnerprogramm die Instruktionen zum Durchführen eines Verfahrens nach einem beliebigen der Ansprüche 1 bis 11 aufweist, wenn die Instruktionen durch die Empfangsstation (R) ausgeführt werden.

## Claims

1. A method for detecting whether a packet (11) from a plurality of packets transmitted by at least one transmitting station (E) over a network (3) has been played back, each packet (11) comprising a message (M) and a packet (11) identifier (SN), the plurality of packets being successively transmitted over several consecutive time periods, the method including the following steps:
- reception (100) of the packet (11) by at least one receiving station (R) and reading of the identifier (SN) of the received packet (11) to obtain a received identifier (SN),
- consultation (114), by the receiving station (R), of a database (7) of identifiers already received to determine whether the received identifier (SN) has already been received, and
- if the received identifier (SN) has not already been received, updating the database (7) to include the received identifier (SN),
**characterized in that**:
- the identifier (SN) includes an indicator of belonging to groups of packets,
- the database (7) includes one or more sub-tables (F) suitable for storing the identifiers (SN) of packets already having been received, each sub-table (F) respectively being dedicated to one of the groups, and
- the method further includes a step for managing the database (7) including conditional erasure of any one of the sub-tables (F) if all of the packets of the group to which that sub-table (F) is dedicated have been received.

2. The method according to claim 1, **characterized in that**:
- the belonging indicator includes a counting indicator (C) representative of a transmission order of said packet (11),
- the sub-table(s) (F) is or are suitable for storing counting indicators (C) respectively belonging to one or more successive intervals of counting indicators, each sub-table (F) respectively being dedicated to one of said successive ranges, and
- the step for managing the database (7) includes conditional erasure of any one of the sub-tables (F) if the sub-table (F) is full.

3. The method according to claim 2, **characterized in that**:
- the belonging indicator further includes a time indicator (T) representative of the time period during which the packet (11) was transmitted, the counting indicator (C) being representative of a transmission order of said packet (11) within the time period during which the packet (11) was transmitted,
- the database (7) includes one or more tables (SF), each table (SF) respectively being suitable for storing identifiers (SN) of packets transmitted during one of the time periods, each table (SF) respectively being dedicated to one of the time periods, and
- each table (SF) includes one or more sub-tables (F).

4. The method according to claim 3, **characterized in that** the step for managing the database (7) includes conditional erasure of any one of the tables (SF) if all of the packets transmitted during the time period of that table (SF) have been received.

5. The method according to claim 3 or 4, **characterized in that** the step for managing the database (7) includes conditional erasure of any one of the tables (SF) if the time elapsed between the time period specific to that table (SF) and a current time indicator is above a given value.

6. The method according to any one of claims 3 to 5, **characterized in that** the database (7) includes a maximum time indicator (Tmax) representative of the maximum of the time indicators of the packets already received, and each table (SF) includes a maximum counting indicator (Cmax) representative of the highest counting indicator interval (C) of all of the identifiers (SN) already having been stored in said table (SF), and **in that**, in the consultation step, the packet (11) is considered already to have been received if the time indicator (T) is below or equal to the maximum time indicator (Tmax) and if:
- in the database (7), no specific table (SF) exists for the time period of which the time indicator (T) is representative, or
- in the database (7), a specific table (SF) for the time period of which the time identifier (T) is representative exists, and in said table (SF), there is a sub-table (F) that has already stored the counting indicator (C), or
- in the database (7), there is a specific table (SF) for the time period of which the time indicator (T) is representative, and in said table (SF), there is no sub-table (F) containing the counting indicator (C), and the counting indicator (C) is less than or equal to the maximum counting indicator (Cmax) of said table (SF).

7. The method according to any one of claims 3 to 6, **characterized in that** it further includes a step (108) for verifying the integrity of at least the received identifier (SN), and generating (112) an alarm if the received identifier (SN) does not demonstrate integrity.

8. The method according to claim 7, **characterized in that** each packet (11) includes a security parameter (SPI) representative of a secret key (K) shared between the transmitter (E) and the receiving station (R), the secret key (K) being used in the step (108) for verifying integrity.

9. The method according to any one of claims 3 to 8, **characterized in that** the receiving station (R) is suitable for receiving packets coming from several transmitting stations (E) and consulting several databases (7) of previously received identifiers, the received identifier (SN) including an indicator (ID) representative of the transmitting station (E) that transmitted the received packet (11), the database (7) consulted in the consultation step (114) being chosen based on the indicator (ID) of the received identifier (SN).

10. The method according to any one of claims 3 to 9, **characterized in that**, in the database (7), for each table (SF), the sub-tables (F) of the table (SF) are concatenated and compressed in a single data block.

11. The method according to any one of claims 3 to 10, **characterized in that** the receiving station (R) implements:
- a Flash memory in which the database (7) is archived completely, preferably in a compressed state,
- a volatile random access memory comprising at least a partial copy of the database (7), and
- a non-volatile memory, preferably in the form of a NVRAM, comprising parts of the database (7) updated during the update step and not yet archived in the Flash memory.

12. A computer program to be installed in a receiving station (R), said program comprising instructions for implementing a method according to any one of claims 1 to 11 when the instructions are executed by the receiving station (R).
